# EUROPÄISCHE PATENTSCHRIFT

(11) **EP 1 640 996 B1**
(45) Veröffentlichungstag und Bekanntmachung des Hinweises auf die Patenterteilung: **12.09.2007**
(21) Anmeldenummer: 05021681.1
(22) Anmeldetag: 12.12.2001
(51) Int. Cl.: G12B 21/20, G12B 21/08, G01N 13/16

(54) **Rastersonde in pulsed force mode, digital und in Echtzeit**
Scanning probe with digitised pulsed-force mode operation and real-time evaluation
Sonde de balayage en mode digital de force pulsée et en temps réel.

(30) Priorität: 13.12.2000 DE 10062049
(43) Veröffentlichungstag der Anmeldung: 29.03.2006
(62) Teilanmeldung aus: 01991830.9
(73) Patentinhaber: WITec Wissenschaftliche Instrumente und Technologie GmbH, 89081 Ulm (DE)
(72) Erfinder: Spizig, Peter, 89188 Niederstotzingen (DE); Koenen, Joachim, 89081 Ulm (DE); Sanchen, Detlef, 89231 Neu-Ulm (DE); Martl, Othmar, 89075 Ulm (DE); Förstner, Jörg, 89077 Ulm (DE)
(74) Vertreter: Sawodny, Michael-Wolfgang

(56) Entgegenhaltungen:
- US-A- 5 519 212
- A.ROSA-ZEISER ET AL.: "The simultaneous measurement of elastic, electrostatic and adhesive properties by scanning force microscopy: pulsed-force mode operation" MEAS. SCI. TECHNOL., Bd. 8, 1997, Seiten 1333-1338, XP000755937 (UK)
- H.-U. KROTIL ET AL.: "Pulsed Force Mode: a New Method for the Investigation of Surface Properties" SURF. INTERFACE ANAL., Bd. 27, 1999, Seiten 336-340, XP000909914
- O. MARTI ET AL.: "Control electronics for atomic force microscopy" REV. SCIENT. INSTR., 1988, Seiten 836-839, XP000050599 New York, NY (US)

## Beschreibung

### Stand der Technik

Die Erfindung betrifft ein Rastersondenmikroskop sowie ein Verfahren zur Erzeugung der Abbildung einer Oberfläche einer zu untersuchenden Probe mit einer Auflösung, die lateral zur Oberfläche besser als 1 *µ*m und senkrecht zur Oberfläche besser als 100 nm ist, wobei eine Rastersonde die Oberfläche punktweise abrastert und an jedem Rasterpunkt der Probenoberfläche der Abstand zwischen Rastersonde und Probenoberfläche periodisch moduliert wird, so daß sich eine Kraft-Zeit-Kurve ergibt.

Im Stand der Technik sind eine Vielzahl von Verfahren zur Abbildung von Probenoberflächen mittels von Rastersonden beschrieben worden.

Eine Möglichkeit der Untersuchung einer Probenoberfläche und der Erzeugung eines Oberflächenbildes mittels einer Rastersonde besteht darin, die Rastersonde in Kontakt mit der Probenoberfläche zu bringen und anschließend die Probenoberfläche abzurastern. Ein derartiges Abbildungsverfahren wird als "contact-mode" bezeichnet und dient beispielsweise der Bestimmung der Topographie sowie der lokalen Reibung. Betreffend das "contact-mode-Verfahren" wird auf nachfolgende Veröffentlichungen:
- Maivald P, Butt H-J, Gould S A C, Prater C B, Drake B, Gurley J A, Elings V B und Hansma P K (1991), Using force modulation to image surface elasticities with the atomic force microscope, Nanotechnology, 2, 103-105 und
- Marti O und Colchero J, 1992, Reibungsm ikroskopie, Phys. Blätter 48, 107
verwiesen.

Der Nachteil dieses Abbildungsverfahrens liegt darin, daß bei Verfahren der mit der Probenoberfläche in Kontakt stehenden Rastersonde Scherkräfte auftreten, die die Oberfläche von weichen Proben wie beispielsweise polymeren und biologischen Systemen deformieren oder sogar zerstören können.

Um eine Oberfläche vor Deformationen oder Zerstörung zu schützen ist es vorteilhaft, die Probenoberfläche mit Hilfe eines Verfahrens zu untersuchen, bei dem die Rastersonde nicht in Kontakt mit dieser steht. Dieses Verfahren wird in der Literatur allgemein als "non-contact-mode" bezeichnet. Es ist ein Verfahren, mit dem eine Zerstörung der Probenoberfläche vollständig ausgeschlossen werden kann. Ein Nachteil dieses Verfahrens besteht jedoch darin, daß die Auflösung mit wachsendem Abstand zwischen Rastersonde und Probenoberfläche abnimmt und keinerlei mechanische Probeneigenschaften untersucht werden können.

Bezüglich des "non-contact-mode" wird auf nachfolgende Veröffentlichungen verwiesen:
- Martin Y, Williams C C and Wickramasinghe H G, (1987), Atomic force microscope-force mapping and profiling on a sub 100-Åscale J. App. Phys., 61, 4723;
- Sarid D, Ruskell T G, Workman R K und Chen D, (1996), J. Vac. Sci. Technol. B, 14, 864-7.

Ein Verfahren, das die Untersuchung von weichen Probenoberflächen, wie beispielsweise die von Polymeren erlaubt, andererseits aber ausreichend Information der Probenoberfläche zur Verfügung stellt, ist das sogenannte "intermediate-contact-mode"-Verfahren, bei dem eine Rastersonde zu Oszillationen nahe ihrer Resonanzfrequenz angeregt werden. Die oszillierende Rastersonde wird dann an die Probe angenähert, bis sie die Probenoberfläche berührt. Der Phasenshift zwischen der freien Schwingung in Luft und der Schwingung wenn sich die Rastersonde an die Oberfläche annähert, hängt von den viskoelastischen Eigenschaften der Probe und dem adhäsiven Potential zwischen Probe und Rastersonde ab. Auf diese Art und Weise lassen sich elastische Eigenschaften bestimmen.

Bezüglich des "intermediate-contact-mode-Verfahrens" wird auf
Spatz J, Sheiko S, Möller M, Winkler R, Reineker P und Marti O, (1995), Forces affecting the substrate in the resonant tapping force microscopy, Nanotechnology, 6, 40-44
Digital Instruments, Incorporated, United States Patent No. 5,412,980 (1995)
   Tapping atomic force microscope
Digital Instruments, Incorporated, United States Patent No. 5,519,212 (1996)
   Tapping atomic force microscope with phase or frequency detection
verwiesen.

Das "intermediate-contact-mode-Verfahren" hat den Nachteil, daß die beiden Größen Amplitude und Phasen-Shift von einer Vielzahl von Variablen abhängen, so daß eine einfache Zuordnung zu einer physikalischen Größe nicht möglich ist.

Diese Nachteile können dadurch überwunden werden, daß die gesamte Kraft-Weg- bzw. Kraft-Zeit-Kurve bei Annähern der Rastersonde an die Probenoberfläche aufgenommen wird. Diese Kurve umfaßt sämtliche Informationen der Wechselwirkungskräfte zwischen Rastersonde und Probe und erlauben eine präzise Bestimmung der viskoelastischen Eigenschaften und der adhäsiven Kräfte.

Bezüglich dieses Verfahrens wird auf
- Radmacher M, Cleveland J P, Fritz M, Hansma H G und Hansma P K, (1994) Mapping interaction forces with the atomic force microscope Biophys. J, 66, 2159 - 65;
- Radmacher M, Fritz M, Cleveland J P, Walters D A und Hansma P K (1994) Imaging adhesion forces and elasticity of lysozyme adsorbed on mica with the atomic force microscope, Langmuir 10, 3809-14;
- Van der Werf K O, Putman C A J, Groth B G and Greve J (1994), Adhesion force imaging in air and liquid by adhesion mode atomic force microscopy Appl. Phys. Lett, 65, 1195-7;
- Mizes H A, Loh K-G, Miller R J D, Ahujy S K and Grabowskie E F (1991), Submicron probe of polymer adhesion with atomic force microscopy; dependence on topography and material inhomogenities Appl. Phys. Lett. 59, 2901-3
verwiesen.

Nachteilig bei diesen Verfahren ist, daß die Scan-Geschwindigkeit zur Aufnahme eines Bildes sehr niedrig ist.

Um diese Geschwindigkeit zu erhöhen, wurde ein neuartiges Verfahren, die sogenannte "Pulsed-Force-Mode"-Mikroskopie entwickelt. Bei der "Pulsed-Force-Mode (PFM)"-Mikroskopie wird die Rastersonde periodisch in z-Richtung, das heißt in senkrechter Richtung relativ zur Probenoberfläche in Oszillationen versetzt und die Kraft-Zeit-Kurve, die ein Abbild der Kraft-Weg-Kurve ist, aufgenommen und bestimmte Parameter dieser Kraft-Zeit-Kurve mit Hilfe analoger Schaltungen, wie beispielsweise Trigger-Schaltungen ausgewertet, um ein Abbild der Probenoberfläche zu erhalten.

Bezüglich der "Pulsed-Force-Mode"-Mikroskopie wird auf
- Rosa Zeiser A, Weiland E, Hild S und Marti O, The simultaneous measurement of elastic, electrostatic and adhesive properties by scanning force microscopy: "pulsed-force-mode-operation", Meas. Sci. Technol. 8, (1997), 1-6
verwiesen.

Nachteilig an dem Abbildungsverfahren einer Probe mit Hilfe der "Pulsed-Force-Mikroskopie", wie sie aus dem Stand der Technik, beispielsweise oben genanntem Dokument bekannt geworden ist, ist, daß Trigger zur Verarbeitung der Analog-Signale gesetzt werden mußten. Da sich die Auswertung der Pulsed-Force-Kurve im wesentlichen auf den Zeitpunkt des Auftreten der Trigger beschränkt, hatte dies Ungenauigkeiten zur Folge und optimale Signale konnten nur schwer erhalten werden.

Des weiteren erforderte das Setzen der Trigger geübtes Bedienpersonal und ist sehr zeitaufwendig.

Ein weiterer Nachteil der "Pulsed-Force-Mikroskopie" nach dem derzeitigen Stand der Technik ist, daß die Möglichkeiten der Auswertung der Kraftkurven sehr beschränkt und damit ungenau bleiben und sich deswegen mit dieser Technik somit nur äußerst schwierig materialwissenschaftlich relevante oder quantitative Meßwerte gewinnen lassen.
Auch ist das Verfahren auf maximal zwei pro rastermikroskopischer Messung auswertbaren Größen beschränkt, was oftmals nicht ausreichend ist.

Aufgabe der Erfindung ist es somit, eine Vorrichtung umfassend eine Rastersonde anzugeben, das es zum einen gestattet, eine Vielzahl physikalischer Eigenschaften während einer rastermikroskopischen Messung qualitativ und quantitativ aufzunehmen, zum anderen aber eine Abbildung in kurzer Zeit und mit ausreichender Genauigkeit zur Verfügung stellt.
Dabei soll durch die Erfindung ermöglicht werden, erstmals auch komplexere Größen wie konstante Maximalkraft (unter Berücksichtigung von z.B. durch Interferenzen oder langreichweitigen Kräften hervorgerufenen Meßartefakten), konstanter Energieeintrag, konstante Eindringtiefe, usw. oder Kombinationen dieser Größen für die Regelung zu verwenden, wobei der Wechsel zwischen verschiedenen Regelparametern möglich sein soll. Um alle in Kraft-Zeit-Kurven enthaltenen Parameter für die Messung zugänglich zu machen und bei einigen Materialparametern die Meßgenauigkeit zu steigern, soll durch die Erfindung des weiteren eine aktive Steuerung von Signalform, Phase, Frequenz und Amplitude des Modulationssignals ermöglicht werden.

Erfindungsgemäß wird diese Aufgabe dadurch gelöst, daß bei einem Rastersondenmikroskop gemäß dem Oberbegriff des Anspruches 1 eine programmierte Logik in Form von Field programmable Gate Arrays (FPGA'S) vorgesehen ist. Die mit der Pulsed-Force-Methode aufgenommene Kraft-Zeit-Kurve werden zu jedem Rasterpunkt digitalisiert und mit Hilfe von digitaler Signalverarbeitung und der programmierten Logik eine Echtzeitauswertung mit einer Zeitspanne kürzer als die Periodendauer vorgenommen. Darüber hinaus kann in einer vorteilhaften Ausführungsform der Datenstroms einer weiteren Recheneinheit zur Onlineauswertung und zur Speicherung für Postprocessing weitergeleitet werden.

In der vorliegenden Anmeldung wird unter
* Echtzeitauswertung eine Auswertung eines digitalen Datenstroms und Bereitstellung des oder der Ergebnisse innerhalb einer fest vorgegebenen Zeitspanne verstanden. Soll das Auswerteergebnis als Istgröße für einen Regler dienen, so ist, um die Reglerabweichungen klein zu halten, eine derartige Echtzeitauswertung erforderlich.
* Unter Onlineauswertung wird eine zum Datenstrom parallel ablaufende Auswertung eines Datenstromes ohne die Notwendigkeit innerhalb einer vorgegebenen Zeitspanne ein Ergebnis bereitzustellen verstanden. Dies ist dann vorteilhaft, wenn man bereits während einer Messung eine Aussage über den Erfolg der Messung treffen möchte. Dann ist eine parallel stattfindende Verarbeitung der Meßdaten notwendig.
* Unter Postprocessing wird in der vorliegenden Anmeldung eine Auswertung eines zuvor auf einem Datenspeichermedium, z.B. einer Festplatte eines Rechners, abgelegten Datenstromes ohne irgendwelche Restriktionen bezüglich des Zeitbedarfs verstanden.

Die Digitalisierung der Kraft-Zeit-Kurve und die Auswertung mittels programmierter Logik erlauben es, daß aus den Kraft-Zeit-Kurven sowohl in Echtzeit nach regelungstechnischer Notwendigkeit, Online, als auch im Rahmen von Postprocessing für jeden Rasterpunkt gemäß Vorgabe eine oder mehrere charakteristische Größen der Kraft-Zeit-Kurve ermittelt und aus diesen charakteristischen Größen Eigenschaftsabbilder der ProbenOberfläche aufgebaut werden können. Durch die Einbeziehung der gesamten Kurve in die Auswertung statt einzelner Kurvenpunkte können neben dem Aufbau einer Abbildung mit Hilfe der charakteristischen Größen, diese auch zur Ableitung bestimmter quantitativer physikalischer Eigenschaften verwendet werden.
Die im Gegensatz zur klassischen Pulsed-Force-Methode bei der Erfindung aktiven Erzeugung und Kontrolle des Modulationssignals erlaubt es, während der Messung interaktiv, aber auch durch Regelparameter automatisch gesteuert, die Modulationskurvenform, -Phase, -Amplitude und -Frequenz zu beeinflussen.

Somit wird durch die Erfindung für die Auswertung der Kraft-Distanz-Kurven eine Vielzahl von Methoden anwendbar, die es gestatten, im Gegensatz zu bisherigen Meßmethoden, innerhalb einer einzigen Messung verschiedenste Probenparameter wie z.B. viskoses, adhesives und elastisches Verhalten getrennt zu erfassen und zu unterscheiden. Da die Kraft-Distanz-Kurven am Ende einer Messung vollständig digital vorliegen und somit einem gegebenenfalls auch zeitaufwendigen Postprocessing unterworfen werden können stehen die gespeicherten Daten auch zur nachträglichen Aufklärung von Meßartefakten zur Verfügung. Gleichzeitig ist mit einer Onlineauswertung eine augenblickliche Erfolgskontrolle zum Meßzeitpunkt möglich, wobei im Vergleich zur "Pulsed-Force-Mikroskopie" gemäß dem zuvor zitierten Stand der Technik umfassendere Auswerteverfahren zum Einsatz kommen können.

Vorteilhaft erscheint dabei vor allem die Möglichkeit das die Zahl der für die Regelung verwendeten und sonstigen auszuwertenden Größen keinerlei Beschränkung mehr unterworfen sind und der Wechsel von einem Auswerteverfahren zum anderen durch Software und nicht mehr wie im Stand der Technik durch den Austausch von Hardware bewerkstelligt werden muß.

Besonders bevorzugt beträgt die Frequenz der periodischen Bewegung der Rastersonde in der Richtung senkrecht zur Probenoberfläche 1 Hz bis 20 kHz und die Amplitude liegt im Bereich von 10 bis 500 nm. Vorteilhafterweise werden dabei sinusförmige oder sinusähnliche Anregungen gewählt, wobei aber auch andere wie sägezahn- oder trapezförmige Anregungen vorteilhaft sein können. Eine Analyse der tatsächlichen Bewegung der Rastersonde ermöglicht es, die Form der Anregung so zu modifizieren bzw. zu verändern, daß die Sonde die gewünschte periodische Bewegung ausführt.

Ausgangspunkt für jeden Bildaufbau ist die Bestimmung der Nullinie als charakteristischer Größe. Die Nullinie kann von Punkt zu Punkt variieren aufgrund langreichweitiger elektrostatischer Kräfte. Die Nullinie kann aus dem Kraftwert der Kraft-Zeit-Kurve ermittelt werden, der sich ergibt, wenn die Rastersonde in der Nähe der Probenoberfläche ist, aber noch nicht mit ihr in Kontakt steht.

Alle weiteren charakteristischen Größen ergeben sich aus der Kraft-Zeit-Kurve unter Berücksichtigung dieser Grund- oder Nullinie.

In einer ersten Ausgestaltung der Erfindung kann vorgesehen sein, als weitere charakteristische Größe den maximalen repulsiven Kraft-Wert aus der digitalisierten Kraft-Zeit-Kurve zu ermitteln, der sich ergibt, während die Rastersonde in Kontakt mit der Oberfläche ist.

In einer weiteren Ausgestaltung der Erfindung ist vorgesehen, als charakteristische Größe die Differenz zwischen einem Punkt im ansteigenden oder abfallenden Ast der Kraft-Zeit-Kurve zur Maximalkraft zu bestimmen. Diese Differenz ist dann ein quantifizierbares Maß für die lokale Steifigkeit der Probe und ergibt aufgetragen über dem abgetasteten Bereich ein Steifigkeitsbild der Oberfläche.

In einer weiteren Ausgestaltung der Erfindung kann vorgesehen sein, als charakteristische Größe den minimalen attraktiven Kraftwert beim Ablösen der Spitze von der Probenoberfläche aus der Kraft-Zeit-Kurve zu ermitteln. Dieser charakteristische Wert ist ein quantifizierbares Maß für die lokale Adhäsion der Probe und ergibt ein Adhäsionsbild der Oberfläche, wenn sie über dem abgetasteten Bereich aufgetragen wird.

Als weitere charakteristische Größe kann, aus der digitalisierten Kraft-Zeit-Kurve der minimale Kraftwert beim Anschnappen der Probensonde an die Probenoberfläche bestimmt werden. Dieser minimale Kraftwert ist ein quantifizierbares Maß für die lokale Anziehung der Probe. Trägt man diese charakteristische Größe über dem abgetasteten Bereich auf, so kann man ein Anziehungsbild der Probe erhalten.

Steifigkeitsbilder der Probe lassen sich aber auch noch auf andere Art und Weise aus der aufgenommenen Kraft-Zeit-Kurve ermitteln. In einer ersten Ausführungsform wird ein Steifigkeitsbild dadurch erhalten, daß als charakteristische Größe die Steigung der Kraft-Zeit-Kurve zu einer bestimmten Zeit beim Eindrücken der Probensonde in die Probenoberfläche ermittelt wird. Diese Steigung ist ein quantifizierbares Maß für die lokale Steifigkeit der Probe.

Alternativ hierzu kann man die Steigung zu einem bestimmten Relativzeitpunkt der Kraft-Zeit-Kurve beim Wegziehen der Probensonde von der Probe bestimmen. Auch diese Steigung ist ein quantifizierbares Maß für die lokale Steifigkeit der Probe und ergibt bei einem Auftrag über dem abgetasteten Bereich ein Steifigkeitsbild derselben.

In einer weiteren Ausgestaltung der Erfindung kann vorgesehen sein, als charakteristische Größe die Frequenz des freien Ausschwingens des Cantilervers zu erfassen. Dieses ist ein quantifizierbares Maß für aufgesammelte Verunreinigungen oder Beschädigungen der Spitze.

Als weitere charakteristische Größe kann aus der digitalisierten Kraft-Zeit-Kurve das Verhältnis zwischen dem minimalen Kraftwert beim Ablösen von der Probenoberfläche und dem gemessenen Kraftwert beim ersten darauffolgenden lokalen Kraftmaximum bestimmt werden. Dieser charakteristische Wert ist ein quantifizierbares Maß für die Energiedissipation beim Ablösen der Spitze von der Probe.

Ermittelt man aus der Kraft-Zeit-Kurve die Anstiegszeit vom Beginn des Kontaktes bis zur maximalen Kraft, so kann man ein Anstiegszeitenbild der Probenoberfläche generieren. Auf analoge Art und Weise ist es möglich, durch Ermitteln der Abfallzeit aus der digitalisierten Kraft-Zeit-Kurve ein Abfallzeitenbild der Probenoberfläche zu erhalten.

In einer fortgebildeten Ausführungsform der Erfindung kann vorgesehen sein, daß die Zeit des repulsiven Kontaktes zwischen Probe und Spitze beziehungsweise die Zeit des Kontaktes zwischen Probe und Spitze aus der auch aufgenommenen digitalisierten Kraft-Zeit-Kurve bestimmt wird. Diese Zeiten ergeben aufgetragen über dem abgetasteten Bereich ein Repulsivkontaktzeitenbild beziehungsweise ein Kontaktzeitenbild der Probenoberfläche.

Ähnlich zu den Kontaktzeiten im repulsiven Bereich der Kraftkurve können in einer fortgebildeten Ausführungsform der Erfindung auch Kontaktzeiten für den adhäsiven Teil der Kraftkurve, etwa vom Kraftminimum bis zum Nulldurchgang der Kraftkurve ermittelt werden.

Diese Zeiten ergeben aufgetragen über dem abgetasteten Bereich ein Abreisszeitenbild der Probenoberfläche.

Neben der direkten Auswertung der Kraft-Zeit-Kurve können noch diverse Integrale unter der Kraft-Zeit-Kurve als charakteristische Größen bestimmt werden. Beispielsweise ist es anhand der digitalisierten Kurve möglich, das Integral unter der Kraft-Zeit-Kurve im Bereich des repulsiven Kontaktes bzw. vom Beginn des Kontaktes bis zum Erreichen der maximalen Kraft und vom Erreichen der maximalen Kraft bis zum Nulldurchgang der Kraft zu bestimmen. Diese Integralwerte ergeben aufgetragen über dem abgetasteten Bereich ein Repulsivkontakt-Integralbild der Probe, im Falle des Integrals vom Beginn des Kontaktes bis zum Erreichen der maximalen Kraft ein Bild der an der Probe geleisteten Arbeit sowie im Falle des Integrals vom Zeitpunkt des Erreichens der maximalen Kraft bis zum Nulldurchgang ein Bild der von der Probe geleisteten Arbeit.

Ähnlich zu den Integralen im repulsiven Bereich können aus den digitalisierten Kraft-Zeit-Kurven auch Integrale für den adhäsiven Bereich der Kraftkurve bestimmt werden.
Beispielsweise ist es möglich die Fläche unter der Kraftkurve Vom Zeitpunkt minimaler Kraft bis zum Zeitpunkt des Nulldurchgangs der Kraftkurve zu bestimmen.
Diese Integral ist ein Maß für die lokalen viskoelastischen Eigenschaften der Probe

Berechnet man die Differenz der Integrale im Bereich des repulsiven Kontaktes sowie des Integrales unter der Kraft-Zeit-Kurve von Beginn des Kontaktes bis zum Erreichen der maximalen Kraft, so kann man ein Bild der von der in der Probe dissipierten Arbeit erstellen.

Besonders vorteilhaft ist es, wenn die aus der Kraft-Zeit-Kurve bestimmten charakteristischen Größen in einem zweiten Speicherbereich unter Zuordnung zu den verschiedenen Meß- bzw. Rasterpunkten abgelegt werden.

Mit der Erfindung ist aufgrund der Echtzeitauswertung erstmals möglich sehr schnell zu einer Aussage zu kommen, ob die momentan durchgeführte Messung erfolgreich verläuft, da die in Echtzeit ausgewerteten digitalisierten Kraft-Zeit-Kurve dem Anwender entweder sofort, d.h. während des laufenden Meßung als extern am Gerät abgreifbares elektrisches Signal, und damit von jedem AFM-Controller einlesbar, oder visualisiert durch den Steuerrechner zur Verfügung stehen.

Das Rastersondenmikroskop gemäß der Erfindung weist eine A/D-Wandlereinrichtung auf, um die aufgenommene Kraft-Zeit-Kurve zu digitalisieren sowie Mittel um vorgegebene charakteristische Größen aus der digitalisierten Kraft-Zeit-Kurve in Echtzeit bestimmen zu können.

Eines oder mehrere der gewonnenen Echtzeit-Auswerteergebnisse können als Regelsignal zur Nachführung der Rastersonde mit der Probentopographie oder zur Steuerung des Modulationssignals verwendet worden. Vorteilhafterweise wird als Regelsignal zur Nachführung der Rastersonde mit der Probentopographie meist die Differenz zwischen dem maximalen repulsiven Kraftwert und dem Kraftwert der sich ergibt wenn die Rastersonde in der Nähe aber noch nicht im Kontakt mit der Probe befindet verwendet, wobei vorteilhafterweise auch auf die Verwendung anderer Größen zurückgegriffen werden kann.

Werden die digitalisierten Kraft-Zeit-Kurven in einem Speicherbereich abgelegt, so können bestimmte Größen der Kraft-Zeit-Kurven durch Postprocessing bestimmt worden.

Vorteilhafterweise wird die oszillierende Bewegung der Rastersonde senkrecht zur Probenoberfläche mit Hilfe eines Piezoelementes angeregt.

Des weiteren ist in einer ersten Ausführungsform vorgesehen, daß die Rastersonde eine an einem Balken angeordnete Spitze umfaßt und die Mittel zur Aufnahme der Kraft-Zeit-Kurve Mittel zur Messung der Balkendurchbiegung, beispielsweise mit Hilfe der Ablenkung eines Laserstrahles umfassen.

Die Erfindung soll nachfolgend anhand der Zeichnungen beispielhaft beschrieben werden.

Es zeigen:
- Figur 1: den charakteristischen Verlauf einer Kraft-Zeit-Kurve
- Figur 2: ein Blockdiagramm für ein erfindungsgemäßes Rastersondenmikroskop.

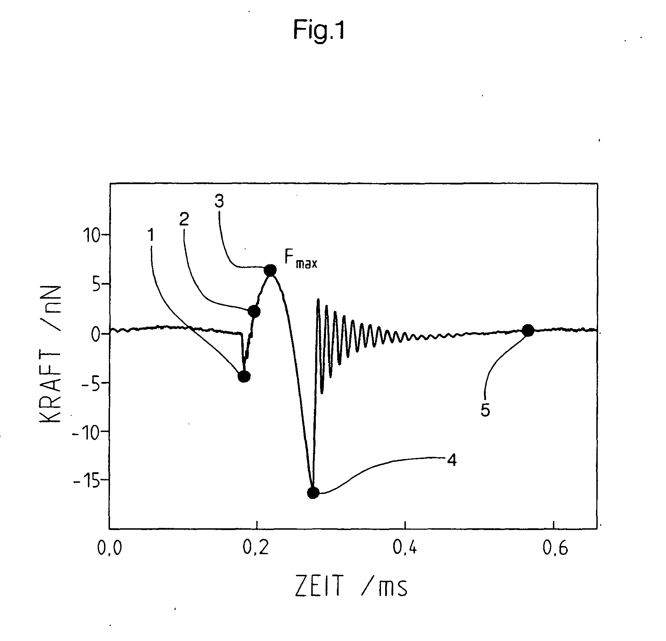

In Figur 1 ist der charakteristische Verlauf einer Kraft-Zeit-Kurve dargestellt, wie er nach Durchlaufen einer Schwingungsperiode einer Rastersonde, vorliegend der an einem Balken angeordneten Sondenspitze erhalten wird. Die Schwingungsamplitude der mittels eines Piezoelementes angeregten Schwingung der Rastersondenspitze liegt zwischen 10 und 500 nm, die Schwingungsfrequenz zwischen 1 Hz und 5 kHz, vorliegend im Bereich 1 kHz.

In Figur 1 sind ganz deutlich die charakteristischen Bereiche der sich bei Anregung senkrecht zur Probenoberfläche ergebenden Kraft-Zeit-Kurve zu erkennen, die zur Bestimmung der charakteristischen Größen herangezogen werden können und bei entsprechender Auftragung über dem abgetasteten Bereich die verschiedenen Formen der Abbildung der Probenoberfläche ergeben.

Die in Figur 1 dargestellte Funktion ist bereits auf die Basis- oder Nullinie normiert, das heißt, der Kraftwert der Basislinie der Rastersonde ist zu Null gesetzt. Die Basislinie kann dadurch bestimmt werden, daß man den Bereich der Kraft-Zeit-Kurve ermittelt, in dem sich der Kraftwert nicht mehr verändert. Diesen Wert - hier mit Bezugsziffer 5 belegt - setzt man zu Null, relativ hierzu ermittelt man die anderen Kraftwerte der Kurve.

Zunächst wird die Rastersonde an die Probenoberfläche angenähert. Nach etwa 0,2 Millisekunden kommt aufgrund der negativen attraktiven Anziehungskräfte zwischen Rastersonde und Probe die Sonde in Kontakt mit der Probe. Nachdem die Spitze mit der Probe in Kontakt ist, wird durch das Piezoelement weiter Kraft auf die Rastersonde beziehungsweise die Spitze ausgeübt und so die Spitze in die Probe bzw. Probenoberfläche eingetrieben. Die rücktreibenden repulsiven Kräfte steigen dabei stark an und erreichen im Punkt 3 ein Maximum. Nach einem voreingestellten Weg beziehungsweise einem voreingestellten maximalen Kraftwert Fₘₐₓ wird die Rastersonde nicht mehr in die Probe eingetrieben sondern vom Piezoelement von der Probe zurückgezogen. Diese gerät aufgrund der Adhäsionskräfte allerdings erst bei Erreichen des Kraftminimums am Punkt 4 außer Kontakt mit der Probe und geht in eine freie Schwingung über. Die freie Schwingung klingt ab, bis die Basislinie 5 erreicht wird.

Anschließend wird der Zyklus nochmals wiederholt.

Der Verlauf der Kraft-Zeit-Kurve ist im Prinzip nach für sämtliche Proben, die mit Hilfe der "Pulsed-Force-Mikroskopie" untersucht werden derselbe, jedoch lassen sich aus der Kurve für die jeweilige Probe beziehungsweise für den jeweiligen Punkt der Probe charakteristische Größen ermitteln, die wiederum zusammengesetzt eine Abbildung der Probenoberfläche in Abhängigkeit von unterschiedlichen physikalischen Parametern ergeben.

So ist beispielsweise die Differenz zwischen dem Punkt 2 im ansteigenden Ast der Kraft-Zeit-Kurve und der Maximal-Kraft ein quantifizierbares Maß für die lokale Steifigkeit der Probe. Wird diese charakteristische Größe aus der aufgenommenen Kraft-Zeit-Kurve gemäß der Erfindung ausgewertet, so kann man ein lokales Steifigkeitsbild der Probe erhalten.

Der minimale attraktive Kraftwert 4 beim Ablösen der Spitze von der Probenoberfläche wiederum ist ein quantifizierbares Maß für die lokale Adhäsion der Probe und ergibt aufgetragen über dem abgetasteten Bereich ein Adhäsionsbild.

Der minimale Kraftwert beim Anschnappen der Rastersonde an die Probenoberfläche im Punkt 1 wiederum ist ein quantifizierbares Maß für die lokale Anziehung der Probe und ergibt aufgetragen über dem abgetasteten Bereich ein Anziehungsbild der Oberfläche. Aus den Anstiegszeiten vom Beginn des Kontaktes bis zur maximalen Kraft und der Abfallzeit von der maximalen Kraft bis zum Erreichen des Nulldurchganges ergeben Anstiegs- und Abfallzeitabbildungen der Probenoberfläche.

Des weiteren ermöglicht die Erfindung auch die Auswertung integraler Größen. So kann das Integral unter der Kraft-Zeit-Kurve im Bereich des repulsiven Kontaktes bestimmt werden sowie das Integral unter der Kraft-Zeit-Kurve vom Beginn des Kontaktes bis zum Erreichen der maximalen Kraft in Punkt 3. Zieht man diese beiden Integralwerte voneinander ab, so erhält man eine quantifizierbare Aussage über die in der Probe dissipierte Arbeit.

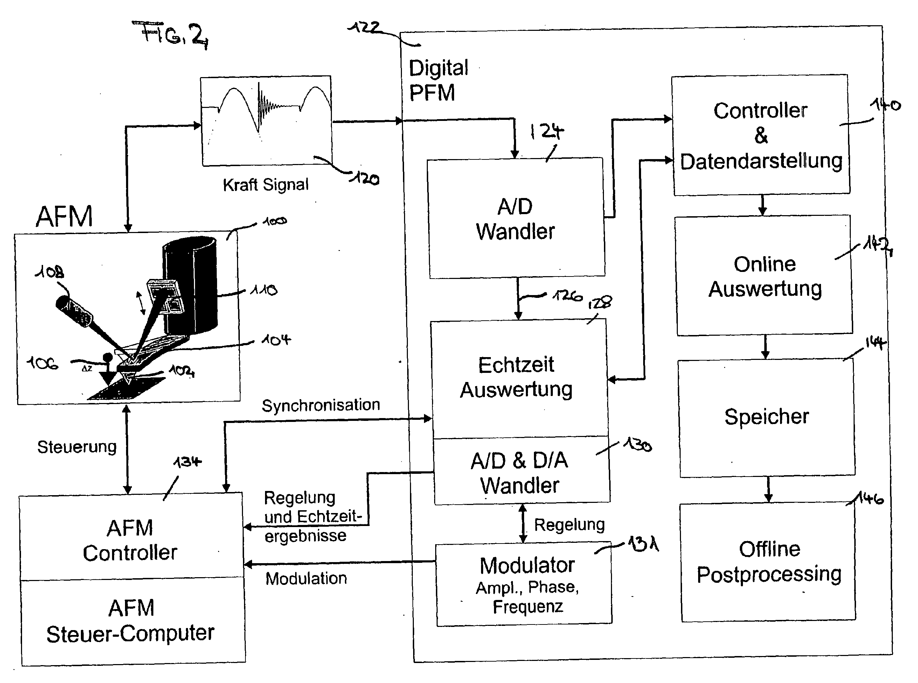

In Figur 2 ist im Rahmen eines Blockschaltbildes beispielhaft der Aufbau eines erfindungsgemäßen Raster-Sonden-Mikroskopes, das im "Pulsed Force Mode" betrieben wird, dargestellt. Das Raster-Sonden-Mikroskop ist mit der Bezugsziffer 100 bezeichnet. Das Raster-Sonden-Mikroskop umfaßt einen Rastersonde 102, die in der Regel eine Spitze ist. Die Rastersonde ist an einem Balken 104 aufgehängt. Die Rastersonde wird in Z-Richtung 106, d. h. in senkrechter Richtung relativ zur Probenoberfläche in Oszillation versetzt. Die Durchbiegung des Balkens 104, an dem die Spitze 102 angeordnet ist, wird durch einen von einer Laserdiode 108 ausgesandten und reflektierten Strahl, der auf einem Vier-Quadranten-Detektor 110 detektiert wird, ausgewertet. Das aufgrund der Durchbiegung des Balkens 104, der auch als Cantilever bezeichnet wird, erhaltene analoge Kraftmeßsignal ist mit der Bezugsziffer 120 belegt. Das analoge Kraftsignal 120 wird einer Steuereinheit 122 gemäß der Erfindung zugeleitet. Die Steuereinheit 122 umfaßt einen A/D-Wandler 124, der die analogen Daten des Kraftsignals 120 in einen digitalen Datenstrom 126 wandelt. Der digitale Datenstrom wird mittels einer Echtzeit-Auswerteeinheit 128 in Echtzeit beispielsweise mit Hilfe einer programmierten Logik ausgewertet. Unter Echtzeit versteht man, daß das Auswerteergebnis garantiert innerhalb einer fest vorgegebenen Zeitspanne, also hier spätestens bis zum Ende des aktuellen Modulationszyklus vorliegt, so daß das Ergebnis als Istgröße für einen Regler dienen kann. Die programmierte Logik kann beispielsweise durch "Field Programmable Gate Arrays", kurz: FPGAs, realisiert sein. Derartige programmierte Logiken sind beispielsweise in Ashok K. Sharma: "Programmable Logic Handbook: PLDs, CPLDs and FPGAs (McGraw-Hill Professional Publishing; ISBN: 0070578524)" oder in "W. Bolton, Bill Bolton: Programmable Logic Controllers : An Introduction (Butterworth-Heinemann; ISBN: 0750647469)" beschrieben.
Mit Hilfe der Echtzeitauswertung 128 ist es möglich, nach dem das ausgewertete, digitale Signal erneut in ein Analogsignal im D/A-Wandler 130 gewandelt wurde, beispielsweise die konstante Maximalkraft (unter Berücksichtigung von z.B. durch Interferenzen oder langreichweitigen Kräften hervorgerufenen Meßartefakten), den konstanten Energieeintrag, die konstante Eindringtiefe, usw. oder Kombinationen dieser Größen für die Regelung zu verwenden.
In die Berechnung der Regler Istgröße kann durch den A/D-Wandler 130 auch ein externes Analogsignal, beispielsweise ein vom AFM-Controller vorgegebener Sollwert, einfliesen. Die Regelgrößen werden vom Controller des Raster-Sonden-Mikroskopes 134 an des Raster-Sonden-Mikroskop 100 zum Nachführen der Spitze 102 am Balken 104 verwandt.

Aufgabe des Modulators 131 ist es die für den "Pulsed Force Mode" notwendige vertikale Oszillation der Meßspitze zu erzeugen. Der digitale Aufbau erlaubt es, beliebige Kurvenformen für die Modulation zu verwenden. Durch die enge Anbindung an die oben beschriebene Echtzeitauswertung ist neben einem interaktiven Nutzereingriff auch ein durch Regelparameter automatisch gesteuerten Einfluß auf Phase, Amplitude und Frequenz der Modulation möglich, was beispielsweise die Korrektur von Piezo-Nichtlinearitäten des Raster-Sonden-Mikroskops gestattet.

Neben Echtzeit-Regelung bzw. Nachführung der Rastersonde 104 ermöglicht die Echzeitauswertung mit Hilfe des Bausteines 128 auch die synchrone Auswertung von charakteristischen Daten im Baustein 140 und somit eine Online-Kontrolle bzw. Auswertung 142 der Messung. Des weiteren kann ein Speicherbereich 144, in dem der digitale Datenstrom abgelegt wird, vorgesehen sein. Der im Speicher abgelegte Datenstrom 144 kann nach Durchführen der Messung offline in einem Postprocessing-Prozeß 146 ausgeführt werden.

Mit der Erfindung wird somit erstmals ein Verfahren sowie eine Vorrichtung zur Durchführung eines Verfahrens zur Verfügung gestellt, mit der es möglich ist, eine Vielzahl für eine Probe charakteristischer Größe durch eine einzige Messung exakt zu bestimmen und hieraus die Abbildung verschiedener physikalischer Oberflächeneigenschaften zu erreichen.

## Patentansprüche

1. Rastersonden-Mikroskop (100), wobei das Rastersonden-Mikroskop (100) eine Rastersonde (102) aufweist und
- Mittel zum Verfahren der Rastersonde (102) lateral und senkrecht relativ zur Probenoberfläche;
- Mittel zum Anregen einer periodischen Bewegung der Rastersonde senkrecht zur Probenoberfläche an vorbestimmten Rasterpunkten, so dass der Abstand (Z) zwischen Probenoberfläche und Rastersonde (102) periodisch moduliert wird;
- Mittel zur Aufnahme einer Kraft-Zeit-Kurve (120) der senkrecht zur Probenoberfläche periodisch modulierten Rastersonde (102);
- eine A/D-Wandlereinrichtung (124), um die aufgenommene Kraft-Zeit-Kurve (120) zu digitalisieren;
- Mittel zur Bestimmung (128) vorgegebener charakteristischer Größen an jedem Rasterpunkt aus der ausgewerteten, digitalisierten Kraft-Zeit-Kurve für diesen Rasterpunkt,
**dadurch gekennzeichnet, dass**
- das Rastersonden-Mikroskop des Weiteren eine Auswerteeinheit aufweist, die eine programmierte Logik in Form von Field programmable Gate Arrays (FPGA's) umfasst, um die digitalisierte Kraft-Zeit-Kurve in Echtzeit auszuwerten.

2. Rastersonden-Mikroskop nach Anspruch 1, wobei an der programmierten Logik ein digitaler Datenstrom (126) anliegt.

3. Rastersonden-Mikroskop nach einem der Ansprüche 1 bis 2, wobei das Rastersonden-Mikroskop Mittel zum Nachführen einer Rastersonde (102) mit Hilfe von der programmierten Logik zur Verfügung gestellten Größen als Regelsignal umfasst.

4. Rastersonden-Mikroskop nach einem der Ansprüche 1 bis 3, wobei die Mittel zur periodischen Anregung ein Piezoelement umfassen.

5. Rastersonden-Mikroskop gemäß einem der Ansprüche 1 bis 4, wobei die Rastersonde eine an einem Balken (104) angeordnete Spitze umfasst und die Mittel zur Aufnahme der Kraft-Zeit-Kurve Mittel (110) zur Messung der Balkendurchbiegung umfassen.

6. Verfahren zur Erzeugung der Abbildung einer zu untersuchenden Probenoberfäche mit einer Auflösung die lateral zur Probenoberfläche besser als 1 µm und vertikal zur Oberfläche besser als 100 nm ist, wobei
eine Rastersonde (102) die Oberfläche punktförmig abrastert und
an jedem Rasterpunkt der Probenoberfläche der Abstand zwischen Rastersonde (102) und Probenoberfläche periodisch moduliert wird, so dass sich für diesen Punkt eine Kraft-Zeit-Kurve der Rastersonde ergibt,
wobei
- die aufgenommene Kraft-Zeit-Kurve mittels eines A/D-Wandlers (124) digitalisiert und der entstehende digitale Datenstrom in Echtzeit mit Hilfe einer Auswerteeinheit (128) die eine programmierte Logik in Form von Field programmable Gate Array's (FPGA's) umfasst, ausgewertet wird, und
- aus der digitalisierten und in Echtzeit ausgewerteten Kraft-Zeit-Kurve eine oder mehrere charakteristische Größen der Kraft-Zeit-Kurve für jeden Rasterpunkt in Echtzeit ermittelt werden sowie
- aus dieser oder diesen charakteristischen Größen der Rasterpunkte eine Abbildung der Probenoberfläche und/oder Kontrollgrößen für den Messablauf erhalten werden.

7. Verfahren gemäß Anspruch 6, wobei aus dem in Echtzeit ausgewerteten Datenstrom Größen für die Regelparamenter der Rastersonde (102) ermittelt werden, die dem oder den Reglern der Rastersonde (102) in Echtzeit zur Verfügung gestellt werden.

8. Verfahren gemäß einem der Ansprüche 6 bis 7, wobei die charakteristische Größe einen oder mehrere der nachfolgenden Größen umfasst:
- den Kraftwert, der sich ergibt, wenn sich die Rastersonde (102) in der Nähe der Probenoberfläche befindet, aber noch nicht mit ihr in Kontakt ist;
- den maximale repulsiven Kraftwert, der sich ergibt, während die Rastersonde in Kontakt mit der Probenoberfläche ist;
- die Differenz zwischen einem Wert im ansteigenden oder abfallenden Bereich der Kraft-Zeit-Kurve und dem Maximalwert der Kraft-Zeit-Kurve;
- den minimalen attraktiven Kraftwert umfasst, der sich beim Ablösen der Rastersonde von der Probenoberfläche ergibt;
- den minimalen Kraftwert beim Heranziehen der Rastersonde an die Probenoberfläche;
- die Steigung der Kraft-Zeit-Kurve zu einem bestimmten Zeitpunkt beim Eindrücken der Spitze in die Probenoberfläche;
- die Steigung der Kraft-Zeit-Kurve zu einem bestimmten Zeitpunkt beim Wegziehen der Spitze von der Probenoberfläche.
- die Frequenz des Cantilevers aus der Kraft-Zeit-Kurve im Zeitraum des freien Ausschwingens des Cantilevers;
- das Verhältnis zwischen minimalem Kraftwert und dem darauf folgendem lokalen Maximalkraftwert;
- die Anstiegszeit von Beginn des Kontaktes der Rastersonde mit der Probenoberfläche bis zum Kraftmaximum;
- die Abfallzeit vom Zeitpunkt des Kraftmaximums bis zum Erreichen des Nulldurchganges in der Kraft-Zeit-Kurve;
- die Zeit des repulsiven Kontaktes zwischen Probe und Rastersonde umfasst;
- den Zeitpunkt des Kontaktes zwischen der Rastersonde und der Probenoberfläche;
- die Zeit vom Erreichen des Kraftminimums bis zum darauf folgenden Nulldurchgang in der Kraft-Zeit-Kurve;
- das Integral unter der Kraft-Zeit-Kurve im Bereich des repulsiven Kontaktes
- das Integral unter der Kraft-Zeit-Kurve vom Beginn des Kontaktes bis zum Erreichen des Kraftmaximums;
- das Integral unter der Kraft-Zeit-Kurve vom Zeitpunkt des Erreichens der maximalen Kraft bis zum Nulldurchgang der Kraft;
- das Integral unter der Kraft-Zeit-Kurve vom Zeitpunkt des Erreichens der minimalen Kraft bis zum Nulldurchgang der Kraft;
- die Differenz des Integrals unter der Kraft-Zeit-Kurve im Bereich des repulsiven Kontaktes und des Integrals unter der Kraft-Zeit-Kurve vom Beginn des Kontaktes bis zum Erreichen der Maximal-Kraft;
- das Integral unter der Kraft-Zeit-Kurve im Bereich des adhäsiven Kontaktes
- das Integral unter der Kraft-Zeit-Kurve vom Zeitpunkt des Nulldurchgang der Kraft bis zum Erreichen des Kraftminimums;
- das Integral unter der Kraft-Zeit-Kurve vom Zeitpunkt des Erreichen des Kraftminimums bis zum Nulldurchgang der Kraft.

## Claims

1. Scanning sensor microscope (100) wherein the scanning sensor microscope (100) has a scanning sensor (102) and
- means for moving the scanning sensor (102) laterally and vertically relative to the specimen surface;
- means for exciting a periodic movement of the scanning sensor vertical to the specimen surface at predetermined scanning points so that the distance (Z) between the specimen surface and the scanning sensor (102) is periodically modulated;
- means for recording a force-time curve (120) of the scanning sensor (102) periodically modulated vertical to the specimen surface;
- an A/D converter device (124) to digitize the recorded force-time curve (120);
- means (128) for determining prespecified characteristic values at each scanning point from the evaluated digitized force-time curve for the respective scanning point;
**characterised in that**
- the scanning sensor microscope furthermore has an analysis unit which comprises a programmed logic in the form of field-programmable gate arrays (FPGAs) in order to analyse the digitized force-time curve in real time.

2. Scanning sensor microscope according to claim 1, wherein a digital data stream (126) is present at the programmed logic.

3. Scanning sensor microscope according to one of claims 1 to 2, wherein the scanning sensor microscope comprises means for guiding a scanning sensor (102) using the values provided by the programmed logic as a control signal.

4. Scanning sensor microscope according to any of claims 1 to 3, wherein the means for periodic excitation comprise a piezo element.

5. Scanning sensor microscope according to any of claims 1 to 4, wherein the scanning sensor microscope comprises a tip arranged on a bar (104) and the means for recording the force-time curve comprises means (110) for measuring the bar flexion.

6. Method for generating the image of a specimen surface to be examined with a resolution which is better than 1 µm lateral to the specimen surface and better than 100 nm vertical to the surface, wherein a scanning sensor (102) scans the surface point by point and at each scanning point of the specimen surface the distance between the scanning sensor (102) and the specimen surface is periodically modulated so that a force-time curve of the scanning sensor is produced for this point, wherein
- the recorded force-time curve is digitized by means of an A/D converter (124) and the resulting digital data stream is analysed in real time using an analysis unit (128) that comprises a programmed logic in the form of field-programmable gate arrays (FPGAs), and
- from the digitized force-time curve analysed in real time, one or a plurality of characteristic values of the force-time curve for each scanning point are determined in real time, and
- from this or these characteristic value(s) of the scanning points, an image of the specimen surface and/or control values for the measurement procedure are obtained.

7. Method according to claim 6, wherein from the data stream analysed in real time, values are determined for the control parameters of the scanning sensor (102) which are made available to the controller(s) of the scanning sensor (102) in real time.

8. Method according to one of claims 6 to 7, wherein the characteristic value comprises one or a plurality of the following values:
- the force value arising when the scanning sensor (102) is in the vicinity of the specimen surface but not yet in contact therewith;
- the maximum repulsion value arising while the scanning sensor is in contact with the specimen surface;
- the difference between a value in the rising or falling area of the force-time curve and a maximum value of the force-time curve;
- the minimum attraction force arising on withdrawal of the scanning sensor from the specimen surface;
- the minimum force arising on approach of the scanning sensor to the specimen surface;
- the gradient of the force-time curve at a particular time on pressing of the tip into the specimen surface;
- the gradient of the force-time curve at a particular time on removal of the tip from the specimen surface;
- the frequency of the cantilever from the force-time curve in the period of free oscillation of the cantilever;
- the ratio between the minimum force value and the subsequent local maximum force value;
- the rise time from the start of contact of the scanning sensor with the specimen surface to the force maximum;
- the fall time from the time of the force maximum to reaching the zero passage in the force-time curve;
- the time duration of repulsive contact between specimen and scanning sensor;
- the time of contact between the scanning sensor and the specimen surface;
- the time from reaching the force minimum to the subsequent zero passage in the force-time curve;
- the integral below the force-time curve in the area of repulsive contact;
- the integral below the force-time curve from the start of contact to reaching the force maximum;
- the integral below the force-time curve from the time of reaching the maximum force to the time of zero passage of the force;
- the integral below the force-time curve from the time of reaching the minimum force to the time of zero passage of the force;
- the difference between the integral below the force-time curve in the area of repulsive contact and the integral below the force-time curve from the start of contact to reaching the maximum force;
- the integral below the force-time curve in the area of adhesive contact;
- the integral below the force-time curve from the time of zero passage of the force to reaching the force minimum;
- the integral below the force-time curve from the time of reaching the force minimum to zero passage of the force.

## Revendications

1. Microscope (100) à sonde de balayage, le microscope (100) à sonde de balayage étant doté d'une sonde de balayage (102), et
- de moyens pour déplacer la sonde de balayage (102) latéralement et perpendiculairement à la surface de l'échantillon ;
- de moyens pour générer un mouvement périodique de la sonde de balayage perpendiculairement à la surface de l'échantillon au niveau de points de balayage prédéterminés, de façon à moduler périodiquement l'écartement (Z) entre la surface de l'échantillon et la sonde de balayage (102) ;
- de moyens pour enregistrer une courbe force / temps (120) de la sonde de balayage (102) modulée périodiquement perpendiculairement à la surface de l'échantillon ;
- d'un dispositif de conversion A/N (124) pour numériser la courbe force / temps (120) enregistrée ;
- de moyens pour la détermination (128) de grandeurs caractéristiques prédéterminées au niveau de chaque point de balayage à partir de la courbe force / temps numérisée et évaluée pour ce point de balayage,
**caractérisé en ce que**
- le microscope à sonde de balayage comporte en outre une unité d'évaluation, qui comprend une logique programmée sous la forme de réseaux prédiffusés de portes programmables par l'utilisateur (FPGA pour *"Field programmable Gate Arrays"),* afin d'évaluer en temps réel la courbe force / temps numérisée.

2. Microscope à sonde de balayage selon la revendication 1, dans lequel un flux de données numériques (126) est appliqué à la logique programmée.

3. Microscope à sonde de balayage selon l'une des revendications 1 à 2, le microscope à sonde de balayage comportant des moyens pour le suivi d'une sonde de balayage (102) à l'aide de grandeurs mises à disposition de la logique programmée en tant que signal de régulation.

4. Microscope à sonde de balayage selon l'une des revendications 1 à 3, dans lequel les moyens pour l'excitation périodique comprennent un élément piézoélectrique.

5. Microscope à sonde de balayage selon l'une des revendications 1 à 4, dans lequel la sonde de balayage comporte une pointe positionnée sur une barre (104), et les moyens pour enregistrer la courbe force / temps comprenant des moyens (110) pour la mesure de la flexion de la barre.

6. Procédé de reproduction d'une surface d'un échantillon à analyser avec une résolution, qui est meilleure que 1 µm latéralement à la surface de l'échantillon, et meilleure que 100 nm verticalement à la surface, une sonde de balayage (102) balayant par point la surface, et l'écartement entre la sonde de balayage (102) et la surface de l'échantillon étant modulé périodiquement au niveau de chaque point de balayage de la surface de l'échantillon, de façon à obtenir pour ce point une courbe force / temps de la sonde de balayage, dans lequel
- la courbe force / temps enregistrée est numérisée au moyen d'un convertisseur A/N (124), et le flux de données numériques engendré est évalué en temps réel à l'aide d'une unité d'évaluation (128) comportant une logique programmée sous la forme de réseaux prédiffusés programmables par l'utilisateur (FPGA),
- de la courbe force / temps numérisée et évaluée en temps réel, une ou plusieurs grandeurs caractéristiques de la courbe force / temps sont déterminées en temps réel pour chaque point de balayage, et
- de cette ou de ces grandeurs caractéristiques des points de balayage, il est obtenu une reproduction de la surface de l'échantillon et/ou des grandeurs de contrôle pour le déroulement de la mesure.

7. Procédé selon la revendication 6, dans lequel des grandeurs pour les paramètres de régulation de la sonde de balayage (102) sont déterminées à partir du flux de données évalué en temps réel, qui sont mises à disposition en temps réel au régulateur ou aux régulateurs de la sonde de balayage (102).

8. Procédé selon l'une des revendications 6 à 7, dans lequel la grandeur caractéristique comprend une ou plusieurs des grandeurs suivantes :
- la valeur de force, qui est obtenue lorsque la sonde de balayage (102) se trouve à proximité de la surface de l'échantillon, mais n'est pas encore en contact avec elle ;
- la valeur maximale de la force répulsive, qui est obtenue pendant que la sonde de balayage est en contact avec la surface de l'échantillon ;
- la différence entre une valeur dans la zone ascendante ou descendante de la courbe force / temps et la valeur maximale de la courbe force / temps ;
- la valeur minimale de la force d'attraction, qui est obtenue lorsque la sonde de balayage se décolle de la surface de l'échantillon ;
- la valeur de force minimale lorsque la sonde de balayage s'approche de la surface de l'échantillon ;
- la pente de la courbe force / temps à un moment défini lors de la pénétration de la pointe dans la surface de l'échantillon ;
- la pente de la courbe force / temps à un moment défini lors du retrait de la pointe de la surface de l'échantillon ;
- la fréquence du cantilever issue de la courbe force / temps dans l'intervalle de temps du libre amortissement de l'oscillation du cantilever ;
- le rapport entre la valeur de force minimale et la valeur de force maximale locale consécutive ;
- le temps de montée du début du contact de la sonde de balayage avec la surface de l'échantillon jusqu'au maximum de force ;
- le temps de descente à partir du moment du maximum de force jusqu'à l'atteinte du passage par zéro dans la courbe force / temps ;
- le temps du contact répulsif entre l'échantillon et la sonde de balayage ;
- le moment du contact entre la sonde de balayage et la surface de l'échantillon ;
- le temps entre l'atteinte du minimum de force et le passage par zéro consécutif dans la courbe force / temps ;
- l'intégrale sous la courbe force / temps dans la zone du contact répulsif ;
- l'intégrale sous la courbe force / temps du début du contact jusqu'à l'atteinte du maximum de force ;
- l'intégrale sous la courbe force / temps à partir du moment de l'atteinte de la force maximale jusqu'au passage par zéro de la force ;
- l'intégrale sous la courbe force / temps à partir du moment de l'atteinte de la force minimale jusqu'au passage par zéro de la force ;
- la différence entre l'intégrale sous la courbe force / temps dans la zone du contact répulsif, et l'intégrale sous la courbe force / temps du début du contact jusqu'à l'atteinte de la force maximale ;
- l'intégrale sous la courbe force / temps dans la zone du contact adhésif ;
- l'intégrale sous la courbe force / temps à partir du moment du passage par zéro de la force jusqu'à l'atteinte du minimum de force ;
- l'intégrale sous la courbe force / temps à partir du moment de l'atteinte du minimum de force jusqu'au passage par zéro de la force.
